# EUROPEAN PATENT SPECIFICATION

(11) **EP 0 962 338 B1**
(45) Date of publication and mention of the grant of the patent: **23.04.2003**
(21) Application number: 99100917.6
(22) Date of filing: 20.01.1999
(51) Int. Cl.: B60B 21/06, B60B 1/04

(54) **Improved spoke wheel**
Verbessertes Speichenrad
Roue à rayons améliorée

(30) Priority: 05.06.1998 IT PN980031 U
(43) Date of publication of application: 08.12.1999
(73) Proprietor: Aprilia World Service B.V., 3012 Rotterdam (NL)
(72) Inventor: Alberti, Alberto, 28055 Ghiffa, Verbania (IT); Cappelletti, Pierandrea, 22070 Beregazzo con Figliaro, Como (IT)
(74) Representative: Agostini, Agostino

(56) References cited:
- EP-A- 0 143 394
- DE-U- 1 718 046
- FR-A- 2 347 209
- US-A- 4 978 176
- US-A- 5 429 421
- PATENT ABSTRACTS OF JAPAN vol. 010, no. 134 (M-479), 17 May 1986 (1986-05-17) & JP 60 259501 A (YAMAHA HATSUDOKI KK), 21 December 1985 (1985-12-21)
- PATENT ABSTRACTS OF JAPAN vol. 008, no. 238 (M-335), 31 October 1984 (1984-10-31) & JP 59 118501 A (HONDA GIKEN KOGYO KK), 9 July 1984 (1984-07-09)

## Description

The invention refers to a spoke wheel which is particularly, though not exclusively, suitable for a tubeless tyre of motorcycles and similar vehicles.

Spoke wheels, namely the wheels of the type where a plurality of detachable spokes connects the rim to the hub, are in use since a long time but found some difficulty in obtaining a large diffusion since in their design an optimum balance between sturdiness of the rim (resistance to radial and tangential stresses received from the tyre, resistance to stresses received from the spokes), lightness and easy/cheap manufacture is particularly difficult to obtain. The difficulties were even magnified since the introduction of tubeless tyres since the end of the spokes, provided or not with fastening nipples,when received in mounting bores provided in the well of the rim, do not guarantee an hermetic seal of the tyre.

A first connstruction of spoke wheel expressly designed for tubeless tyres is known from the utility model DE-GM 17 18 046.The rim of this wheel is provided with cantilevered extensions which protrude outwards from the attachment of the lateral flanges for retaining the tyre and are adapted to receive an end of the spokes, preferably the end provided with a fastening nipple. Apart from a very special visual aspect due to the said extensions, said wheel has a small sturdiness since the stresses received from the spokes are carried by cantilevered and relatively weak portions of the rim, when high grade and expensive metal alloys are not used.

A second more recent construction of a spoke wheel for tubeless tyres is disclosed by the patent EP-B-0 143 394 and is illustrated in the attached figure 1, depicting a cross section of the wheel in a radial plane of the rim, to permit an useful comparison with the present invention.

JP-A-60 259 501 discloses a spoke wheel for motorcycles and similar according to the preamble of claim 1 having a rim and a hub connected to one another through a plurality of detachable spokes, whereby the rim is integrally provided with a pair of tubular sections, each of them being arranged in the space comprised between one of the flanges retaining the beads of the tire and the wheel center plane. However, said wheel is not adapted to tubeless tires because the spoke ends pass through the rim and arrive directly in contact with the tire.

Rim 1, having a profile conforming to ETRTO standards, of the known spoke wheel consists of a pair of flanges 2, 3 for the abutment of the beads outer side of a tyre T, a pair of associated bases 4, 5 adapted to carry the inner circumference of the beads and a well 6 connecting the said bases to one another. Flanges 2, 3 have quite a remarkable thickness A since a plurality of bores 9, extended obliquely from the center plane P of the wheel, are drilled in them for mounting first ends 7, namely the ends having no nipples, of spokes 8. Spokes 8 extend rectilinear to a ring-like extension of the hub to which they are fastened by means of nipples screwed at their second end.

Despite an indiscussed increase of sturdiness this wheel is remarkably heavy and may consequently have an undesiderably high cost, for example when the rim is made with steel.

It is consequently an object of the present invention to provide a spoke wheel, particularly, though not exclusively, suitable for tubeless tyres of motorcycles and similar wherein sturdiness and weight are in an optimum balance and adapted to be manufactured expeditiously and at a low cost.

A wheel constructed with the features claimed herebelow will reach the said as well as other objects.

Features and advantages of the present inventionwill become more apparent from the following description of a preferred embodiment and the attached drawing wherein:
- figure 1, already described herein, shows a cross-section in a radial plane of the rim of a wheel according to the already mentioned patent EP-B-0 143 394;
- figure 2 is similar to figure 1 but shows the rim of a wheel according to a preferred, though not exclusive, embodiment of the present invention;
- figure 3 is a partial side view of a wheel according to the present invention to show a method way of fastening the spokes to the hub;
- figure 4 is similar to figure 3 and shows a second method of fastening the spokes to the hub according to the present invention.

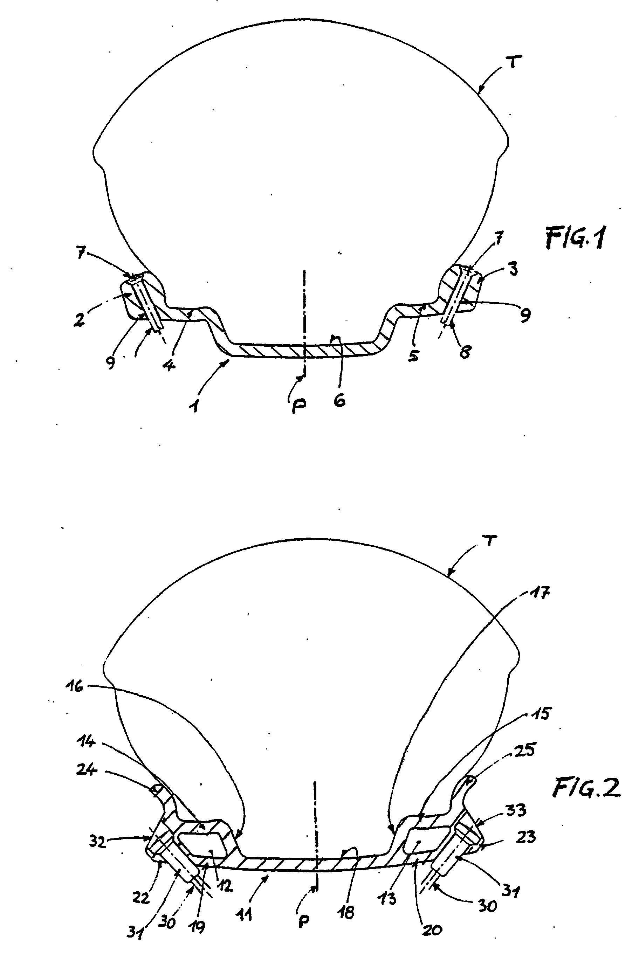

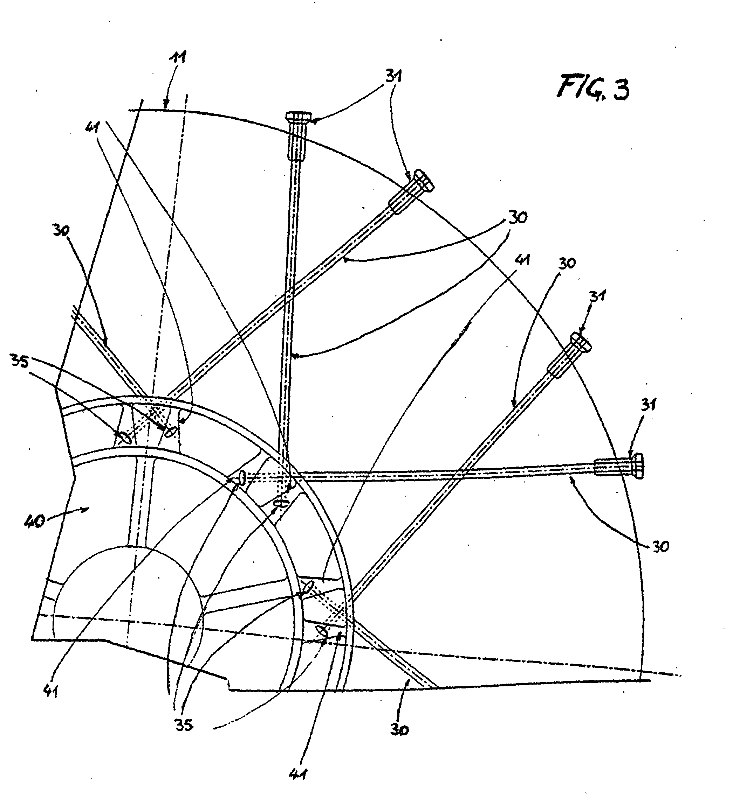

Referring now to figure 1, the rim 11 of a spoke wheel according to the present invention, obviously having a profile conforming to ETRTO standards, includes two tubular and substantially four-sided sections 12, 13 which are arranged within the space defined by flanges 24, 25 which retain the beads of a tyre T in symmetrical positions with respect to the transverse center plane P of the wheel. The walls of sections 12, 13 consist of the inner lateral walls 16, 17 of the well 18, of the bases 14, 15 of the rim 11 which are adapted to carry the inner circumference of the beads of tyre T, of opposed extensions 19, 20 of the bottom 21 of well 18 and of outer lateral walls 22, 23 for the connection of said flanges 24, 25 to said opposed extensions 19 resp. 20. As clearly depicted in fig. 2, the said connection walls 22, 23 have outwardly directed surfaces starting from the attachment of the corresponding flanges 24, 25. Briefly, tubular sections 12, 13 of rim 11 are arranged in a radially inner position than flanges 22, 23 and in an axially outer position than the well 18.

In a preferred embodiment of the present invention the seats of a first end of wheel spokes 30, preferably the end screwed to fastening nipples 31, consist of flared borings 32, 33 drilled along the outer lateral walls 22, 23 for the connection of said flanges 24, 25 to said opposed extensions 19 resp. 20 which belong to the tubular sections 12, 13 of rim 11 - see figure 2. In other wors, the ends 30 provided with fastening nipples 31 are received into tubular sections 12, 13 which are definitely sturdy parts of the rim 11 having a remarkable moment of inertia as well as a reduced weight since they are hollow.

The said advantage is furthermore enhanced when, according to another preferred embodiment of the invention, rim 11 is made with a butt welded one-piece extrusion of a light alloy, which is simple and cheap to manufacture.

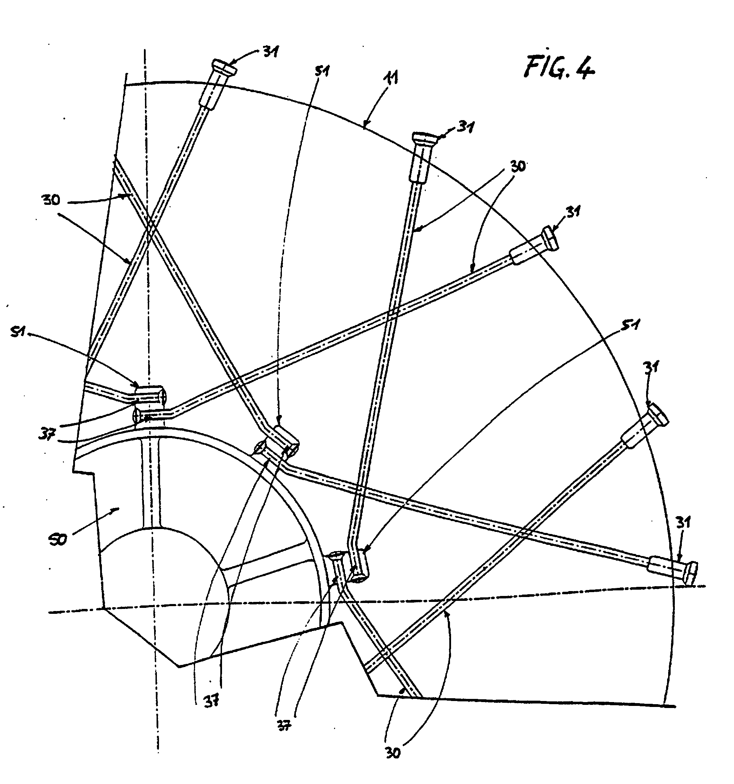

Figure 3 depicts a first method, known per se, to fasten spokes 30 to suitable borings (not shown) drilled in radial extensions 41 of hub 40, this method being used when the second end 35 is aligned with the remaining length of spokes 30, namely when they are arranged in a nearly radial disposition.

Figure 4 depicts a second method, known per se, to fasten spokes 30 to hub 50, this method being used when the second end 37 is arranged in a substantially tangential direction with respect to hub 50. The said second ends 37 of spokes 30 have a disposition forming an angle of about 20 to 45° with the remaining length of spokes 30 so as to be pairwise fastened to suitable borings (not shown) drilled in radial extensions 51 of hub 50.

The advantages of the present invention can be summarized as follows
a) the provision of tubular sections 12, 13, causing a considerable increase of the wheel moment of inertia, permits to take up also high stresses transmitted from the tyre as well as from the spokes;
b) the increase of weight of the wheel due to tubular sections 12, 13 is quite reduced provided that two of the walls in each section (namely the walls designated by reference numerals 14, 16 resp. 15, 17) are in any case a portion of a rim profile according to ETRTO standards;
c) extrusions of a light alloy, having a rather low manufacturing cost, can be used to make the wheel rims.

Furthermore, the above described preferred embodiment of the present invention has an additional advantage consisting in a complete and immediate accessibility of nipples 31, which are arranged at the outer periphery of the wheel, for the screwing operation onto the outer end of spokes 30 which makes the wheel expedite and easy to manufacture.

## Claims

1. A spoke wheel for a tubeless tyre (T), particularly of motorcycles and similar, having a rim (11) with flanges (24, 25) and a hub (40, 50) connected to one another through a plurality of detachable spokes (30), the rim (11) being integrally provided with a pair of tubular sections (12, 13) having outer lateral walls (22, 23), each of the tubular sections (12, 13) being arranged in the space comprised between one of the flanges (24, 25) retaining the beads of the tyre (T) and the wheel center plane (p), **characterized in that** the seats (32, 33) for fastening a first end of the spokes (30) to the rim (11) are drilled along the outer lateral walls (22, 23) of the tubular sections (12, 13) of the rim (11).

2. A spoke wheel according to claim 1, **characterized in that** the walls of said tubular sections (12, 13) consist of the bases (14, 15) of the rim (11) which are adapted to carry the inner circumference of the beads of the tyre (T), of inner lateral walls (16, 17) and opposed extensions (19, 20) of the bottom (21) of the well (18) and of outer lateral walls (22, 23) for the connection of said flanges (24, 25) to said opposed extensions (19, 20).

3. A spoke wheel according to claim 1 or 2, **characterized in that** the second end (35) of the spokes (30) has a substantially radial disposition with respect to the wheel hub (40).

4. A spoke wheel according to any of the previous claims, **characterized in that** the second end (37) of the spokes (30) has a substantially tangential disposition with respect to the wheel hub (50).

5. A spoke wheel according to any of the previous claims, **characterized in that** the rim (11) consists of a butt-welded one-piece extrusion of light alloy.

## Patentansprüche

1. Speichenrad für einen schlauchlosen Luftreifen (T), insbesondere von Motorädern u.ä., mit einer Flanschen (24, 25) aufweisenden Felge (11) und einer Nabe (40, 50), die miteinander durch eine Mehrzahl abnehmbarer Speichen (30) verbunden sind, wobei die Felge (11) mit einem Paar Außenseitenwände (22, 23) aufweisender röhrenförmiger Abschnitten (12, 13) einstückig versehen ist, wobei jeder der genannten röhrenförmigen Abschnitte in dem zwischen einer der die Wülste des Luftreifens (T) rückhaltenden Flanschen (24, 25) und der Mittelebene (p) des Rades befindlichen Raum angeordnet ist, **dadurch gekennzeichnet, daß** die zum Verbinden eines ersten Endes der Speichen (30) mit der Felge (11) dienenden Aufnahmesitze (32, 33) längs der Außenseitenwände (22, 23) der genannten röhrenförmigen Abschnitte (12, 13) der Felge (11) ausgebohrt sind.

2. Speichenrad nach Anspruch 1, **dadurch gekennzeichnet, daß** die Wände der genannten röhrenförmigen Abschnitte (12, 13) aus den Füßen (14, 15) der Felge (11), die zum Tragen des Innenkreises der Wülste des Luftreifens (T) vorgesehen sind, Innenseitenwänden (16, 17) und entgegengesetzten Ausdehnungen (19, 20) der Sohle (21) der Vertiefung (18) und der Außenseitenwände (22, 23) zum Verbinden der genannten Flanschen (24, 25) mit der genannten entgegengesetzten Ausdehnungen (19, 20) bestehen.

3. Speichenrad nach Anspruch 1 oder 2, **dadurch gekennzeichnet, daß** das zweite Ende (35) der Speichen (30) eine im wesentlichen radiale Anordnung im Vergleich zur Radnabe (40) aufweist.

4. Speichenrad nach einem der vorhergehenden Ansprüche, **dadurch gekennzeichnet, daß** das zweite Ende (37) der Speichen (30) eine im wesentlichen tangentiale Anordnung im Vergleich zur Radnabe (50) aufweist.

5. Speichenrad nach einem der vorhergehenden Ansprüche, **dadurch gekennzeichnet, daß** die Felge (11) aus einem stumpfgeschweißten Einstück-Pressprofil aus Leichtmetall besteht.

## Revendications

1. Une roue à rayons pour un pneu sans chambre à air (T), en particulier pour motocycles et similaires, comprenant une jante (11) avec rebords (24, 25) et un moyeu (40, 50) qui sont joints l'une à l'autre par une pluralité de rayons amovibles (30), la jante (11) étant pourvue intégralement de deux sections tubulaires (12, 13) avec parois latérales extérieures (22, 23), chacune desdites sections tubulaires (12, 13) étant disposée dans l'espace compris entre un des rebords (24, 25) retenant les talons du pneu (T) et le plan central (p) de la roue, **caractérisé en ce que** les sièges (32, 33) pour fixer une première extrémité des rayons (30) à la jante (11) sont percés le long des parois latérales extérieures (22, 23) des sections tubulaires (12, 13) de la jante (11).

2. Roue à rayons selon la revendication 1, **caractérisé en ce que** les parois des sections tubulaires (12, 13) sont composées par les bases (14, 15) de la jante (11), qui sont aptes à supporter la circonférence intérieure des talons du pneu (T), les parois latérales intérieures (16, 17) et les extensions opposées (19, 20) du fond (21) du creux (18), ainsi que par les parois latérales extérieures (22, 23) pour joindre lesdites rebords (24, 25) aux dites extensions opposées (19, 20).

3. Roue à rayons selon la revendication 1 ou 2, **caractérisé en ce que** la deuxième extrémité (35) des rayons (30) a une disposition essentiellement radiale par rapport au moyeu (40) de la roue.

4. Roue à rayons selon une des revendications précédentes, **caractérisé en ce que** la deuxième extrémité (37) des rayons (30) a une disposition essentiellement tangentielle par rapport au moyeu (50) de la roue.

5. Roue à rayons selon une des revendications précédentes, **caractérisé en ce que** la jante (11) est formée par une pièce unique profilée en alliage léger soudée en bout.
